(19) Europäisches Patentamt / European Patent Office / Office européen des brevets

(11) **EP 3 423 730 B1**

(12) **EUROPÄISCHE PATENTSCHRIFT**

(45) Veröffentlichungstag und Bekanntmachung des Hinweises auf die Patenterteilung:
**07.04.2021   Patentblatt 2021/14**

(51) Int Cl.:
*F16D 48/06* ^(2006.01)        *B60W 10/06* ^(2006.01)
*B60W 10/02* ^(2006.01)        *B60W 20/00* ^(2016.01)

(21) Anmeldenummer: **17706242.9**

(22) Anmeldetag: **20.02.2017**

(86) Internationale Anmeldenummer:
**PCT/EP2017/053818**

(87) Internationale Veröffentlichungsnummer:
**WO 2017/148728 (08.09.2017 Gazette 2017/36)**

(54) **VERFAHREN ZUR ADAPTION EINES GREIFPUNKTS EINER TRENNKUPPLUNG FÜR EIN FAHRZEUG**

METHOD FOR ADAPTING AN ENGAGEMENT POINT OF A VEHICLE CLUTCH

PROCÉDÉ D'ADAPTATION D'UN POINT DE PRISE D'UN EMBRAYAGE DE SÉPARATION POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2016   DE 102016203434**

(43) Veröffentlichungstag der Anmeldung:
**09.01.2019   Patentblatt 2019/02**

(73) Patentinhaber: **Audi AG**
**85045 Ingolstadt (DE)**

(72) Erfinder:
• **HOMMES, Georg**
**85049 Ingolstadt (DE)**
• **SCHIERGL, Andreas**
**84069 Schierling (DE)**

(56) Entgegenhaltungen:
**EP-A2- 2 014 946        WO-A1-2008/064633**
**WO-A1-2011/134451        WO-A2-2015/086013**
**DE-A1-102013 103 878**

## Beschreibung

Die Erfindung betrifft ein Verfahren zur Adaption eines Greifpunkts einer Trennkupplung für ein Fahrzeug gemäß dem Oberbegriff von Patentanspruch 1.

Ein solches Verfahren zur Adaption eines Greifpunkts einer Trennkupplung für ein Fahrzeug ist beispielsweise aus der DE 102 28 709 A1 bekannt. Die Trennkupplung ist zwischen wenigstens einem geschlossenen Zustand und wenigstens einem geöffneten Zustand verstellbar. In dem geschlossenen Zustand ist eine Abtriebswelle einer Verbrennungskraftmaschine zum Antreiben eines Fahrzeugs über die Trennkupplung mit einem Rotor einer elektrischen Maschine zum Antreiben des Fahrzeugs gekoppelt. In dem geöffneten Zustand ist die Abtriebswelle von dem Rotor entkoppelt. Mit anderen Worten ist die Abtriebswelle in dem geöffneten Zustand der Trennkupplung nicht über die Trennkupplung mit dem Rotor gekoppelt.

Der Greifpunkt der Trennkupplung wird auch als Tastpunkt bezeichnet und ist beispielsweise diejenige Stellung, bei der die Trennkupplung ein vorbestimmtes, kleines Drehmoment überträgt. Mit anderen Worten ist unter dem Greif- beziehungsweise Tastpunkt beispielsweise eine solche Stellung zu verstehen, bei welcher die Trennkupplung eine erste Welle wie beispielsweise die Abtriebswelle mit einer zweiten Welle wie beispielsweise dem Rotor derart koppelt, dass beispielsweise eine Rotation der ersten Welle durch die zweite Welle über die Trennkupplung, beispielsweise um ein bestimmtes Maß, beeinflusst wird beziehungsweise umgekehrt. Durch die Adaption des Greif- beziehungsweise Tastpunkts können beispielsweise verschleißbedingte und/oder temperaturbedingte Änderungen des Greifpunkts kompensiert werden, sodass ein automatisches, das heißt beispielsweise mittels einer elektronischen Recheneinrichtung über wenigstens ein Stellglied bewirktes Öffnen und Schließen der Trennkupplung bedarfsgerecht, insbesondere komfortabel, möglich ist. Unter dem Schließen der Trennkupplung wird das Verstellen der Trennkupplung aus dem geöffneten Zustand in den geschlossenen Zustand verstanden. Unter dem Öffnen der Trennkupplung wird das Verstellen der Trennkupplung von dem geschlossenen Zustand in den geöffneten Zustand verstanden.

Des Weiteren offenbart die WO 2009/127459 A1 eine Steuer-/Regelvorrichtung für einen Fahrzeugantrieb, der mindestens ein Antriebsaggregat und eine in einem Antriebsstrang des Fahrzeugantriebs angeordnete automatische Kupplung aufweist, die bei einem Übergang zwischen zwei aufeinanderfolgenden Leerlaufzuständen öffnet oder schließt. Dabei ist mindestens ein Leerlaufregler mit einem Integrationsglied zur Regelung einer Leerlaufdrehzahl des Antriebsaggregats vorgesehen. Ferner ist es vorgesehen, dass beim Übergang ein Steuereingriff erfolgt, um Abweichungen eines Ist-Werts der Leerlaufdrehzahl von einem Soll-Wert zu vermeiden.

Außerdem offenbart die DE 10 2013 220 399 A1 ein Verfahren zur Steuerung eines hybridischen Antriebsstrangs mit einer Brennkraftmaschine mit einer Kurbelwelle und einer in einer Riemenscheibenebene der Brennkraftmaschine angeordneten und mittels eines schaltbaren Planetengetriebes mit der Kurbelwelle in Wirkeingriff stehenden Elektromaschine. Das Planetengetriebe wird während eines Startvorgangs der Brennkraftmaschine von einem eine zwischen einem Hohlrad des Planetengetriebes und einem drehfest angeordneten Gehäuse angeordnete Bremse betätigenden Aktor über einen Aktorweg auf eine vorgegebene Schließposition gesteuert. Dabei ist es vorgesehen, dass die Schließposition mit einem mittels einer aus einer elektrischen Steuergröße des Aktors und einer Verfahrgeschwindigkeit des Aktors ermittelten Gradientenänderung bestimmten Tastpunkt zwischen Hohlrad und Gehäuse verglichen und abhängig von diesem eingestellt wird

Aus der WO 2008/064633 A1 ist auch ein Verfahren und Vorrichtung zum Adaptieren des Greifpunktes einer Trennkupplung in einem Fahrzeughybridantriebsstrang bekannt.

Aufgabe der vorliegenden Erfindung ist es, ein Verfahren der eingangs genannten Art derart weiterzuentwickeln, dass der Greifpunkt der Trennkupplung besonders präzise und schnell adaptiert werden kann.

Diese Aufgabe wird erfindungsgemäß durch ein Verfahren mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft ein Verfahren zur Adaption eines Greifpunkts einer Trennkupplung eines Fahrzeugs, insbesondere eines Kraftfahrzeugs wie beispielsweise eines Hybridfahrzeugs. Die Trennkupplung ist zwischen wenigstens einem geschlossenen Zustand und wenigstens einem geöffneten Zustand verstellbar. In dem geschlossenen Zustand ist eine Abtriebswelle einer Verbrennungskraftmaschine zum Antreiben des Fahrzeugs über die Trennkupplung mit einem Rotor einer elektrischen Maschine zum Antreiben des Fahrzeugs gekoppelt. In dem geöffneten Zustand ist die Abtriebswelle von dem Rotor entkoppelt. Mit anderen Worten ist die Abtriebswelle in dem geöffneten Zustand der Trennkupplung nicht über die Trennkupplung mit dem Rotor der elektrischen Maschine gekoppelt.

Um nun den Greifpunkt der Trennkupplung besonders präzise und schnell, das heißt in kurzer Zeit, adaptieren zu können, umfasst das Verfahren erfindungsgemäß einen ersten Schritt, bei welchem die zunächst aktivierte Verbrennungskraftmaschine deaktiviert und die zunächst geschlossene Trennkupplung geöffnet wird. Mit anderen Worten, ausgehend von einem Betriebszustand, in welchem die Verbrennungskraftmaschine aktiviert und die Trennkupplung geschlossen ist, wird die Verbrennungskraftmaschine deaktiviert und die Trennkupplung geöffnet. Unter dem Öffnen der Trennkupplung ist zu verstehen, dass die Kupplung aus dem geschlossenen Zustand in den geöffneten Zustand verstellt wird. Demzufolge ist unter einem Schließen der Trennkupplung zu verstehen, dass die Trennkupplung aus ihrem geöffneten Zustand in ihren geschlossenen Zustand verstellt wird.

Unter dem Deaktivieren der Verbrennungskraftmaschine ist zu verstehen, dass ein gefeuerter Betrieb der Verbrennungskraftmaschine beendet wird, sodass die Verbrennungskraftmaschine von ihrem gefeuerten Betrieb in ihren ungefeuerten oder unbefeuerten Betrieb überführt wird. Demzufolge ist unter der aktivierten Verbrennungskraftmaschine zu verstehen, dass die Verbrennungskraftmaschine in ihrem gefeuerten Betrieb betrieben wird. Unter einem Aktivieren der Verbrennungskraftmaschine ist somit zu verstehen, dass der ungefeuerte oder unbefeuerte Betrieb der Verbrennungskraftmaschine beendet wird, sodass die zunächst deaktivierte Verbrennungskraftmaschine von ihrem ungefeuerten Betrieb in ihren gefeuerten Betrieb überführt wird. Demzufolge ist unter der deaktivierten Verbrennungskraftmaschine zu verstehen, dass sich die Verbrennungskraftmaschine in ihrem unbefeuerten beziehungsweise ungefeuerten Betrieb beziehungsweise nicht in ihrem gefeuerten Betrieb befindet. Im ungefeuerten Betrieb der Verbrennungskraftmaschine laufen in ihren beispielsweise als Zylinder ausgebildeten Brennräumen keine Verbrennungsvorgänge ab.

Bei einem zweiten Schritt des erfindungsgemäßen Verfahrens wird ein erster Verlauf der Drehzahl der Abtriebswelle erfasst, während die Trennkupplung geöffnet und die Verbrennungskraftmaschine deaktiviert ist. Die Drehzahl der Abtriebswelle beziehungsweise der insbesondere zeitliche Verlauf der Drehzahl der Abtriebswelle wird beispielsweise von einer ersten Drehzahl bis zur zweiten Drehzahl der Abtriebswelle erfasst. Da die Trennkupplung geöffnet und die Verbrennungskraftmaschine deaktiviert ist, während der erste Verlauf erfasst wird, nimmt die Drehzahl der Abtriebswelle beziehungsweise der Verlauf der Drehzahl der Abtriebswelle von der ersten Drehzahl zur zweiten Drehzahl üblicherweise ab.

Bei einem dritten Schritt des Verfahrens wird ein Reibmoment der Verbrennungskraftmaschine in Abhängigkeit von wenigstens einem vorgegebenen Trägheitsmoment der Verbrennungskraftmaschine und einem ersten Drehzahlgradienten berechnet, wobei der erste Drehzahlgradient aus dem erfassten ersten Verlauf ermittelt wird. Beispielsweise wird der erste Drehzahlgradient aus einem ersten Drehzahlintervall des ersten Verlaufs ermittelt. Das erste Drehzahlintervall ist beispielsweise zumindest ein erster Teil des ersten Verlaufs. Der erste Drehzahlgradient beschreibt somit eine Veränderung der Drehzahl der Abtriebswelle beziehungsweise des Verlaufs der Drehzahl der Abtriebswelle in dem ersten Drehzahlintervall.

Das Trägheitsmoment der Verbrennungskraftmaschine ist beispielsweise in einer Speichereinrichtung, insbesondere einer elektronischen Recheneinrichtung, gespeichert. Das Reibmoment der Verbrennungskraftmaschine wird beispielsweise mittels der elektronischen Recheneinrichtung, welche auch als Steuergerät bezeichnet wird, berechnet, indem die elektronische Recheneinrichtung das gespeicherte Trägheitsmoment aus der Speichereinrichtung abruft und empfängt. Ferner wird mittels der elektronischen Recheneinrichtung in Abhängigkeit von dem erfassten ersten Verlauf der erste Drehzahlgradient ermittelt, insbesondere berechnet, sodass schließlich das Reibmoment der Verbrennungskraftmaschine in Abhängigkeit von dem ersten Drehzahlgradienten und in Abhängigkeit von dem vorgegebenen Trägheitsmoment berechnet wird. Hierzu wird der erste Drehzahlgradient mit dem vorgegebenen Trägheitsmoment multipliziert.

Bei einem, sich vorzugsweise an den ersten Schritt und den zweiten Schritt anschließenden, vierten Schritt des Verfahrens wird die Trennkupplung in Richtung ihres geschlossenen Zustands verstellt. Darunter ist beispielsweise zu verstehen, dass die Trennkupplung ausgehend von ihrem geöffneten Zustand aus dem geöffneten Zustand in Richtung des geschlossenen Zustands, jedoch nicht vollständig in den geschlossenen Zustand verstellt wird, sodass die Trennkupplung beispielsweise einen zwischen dem geschlossenen Zustand und dem geöffneten Zustand liegenden Zwischenzustand einnimmt.

Bei einem fünften Schritt des Verfahrens wird ein auf den ersten Verlauf folgender zweiter Verlauf der Drehzahl der Abtriebswelle erfasst, während die Trennkupplung in Richtung ihres geschlossenen Zustands verstellt wird und die Verbrennungskraftmaschine noch deaktiviert ist. Bei einem sechsten Schritt des Verfahrens wird ein zweiter Drehzahlgradient aus dem erfassten zweiten Verlauf ermittelt. Beispielsweise wird der zweite Drehzahlgradient aus einem zweiten Drehzahlintervall des zweiten Verlaufs ermittelt, wobei das zweite Drehzahlintervall beispielsweise zumindest ein zweiter Teil des zweiten Verlaufs ist. Das zweite Drehzahlinterfall folgt beispielsweise zeitlich auf das erste Drehzahlintervall und erstreckt sich beispielsweise von einer von der ersten und der zweiten Drehzahl unterschiedlichen dritten Drehzahl bis zu einer von der ersten, der zweiten und der dritten Drehzahl unterschiedlichen, vierten Drehzahl, sodass der zweite Verlauf die Drehzahl und insbesondere die Änderung der Drehzahl der Abtriebswelle in dem zweiten Drehzahlverlauf beschreibt.

Beispielsweise wird die Trennkupplung in dem zweiten Drehzahlintervall in Richtung ihres geschlossenen Zustands verstellt oder befindet sich bereits in dem Zwischenzustand. Da die Trennkupplung beim Erfassen des ersten Verlaufs geöffnet ist, wird der erste Verlauf beziehungsweise die Drehzahl der Abtriebswelle beim Erfassen des ersten Verlaufs nicht durch die elektrische Maschine beeinflusst. Da während des Erfassens des zweiten Verlaufs die Trennkupplung von ihrem geöffneten Zustand in Richtung ihres geschlossenen Zustands verstellt wird, kommt es beispielsweise zu einer durch die elektrische Maschine bewirkten Beeinflussung der Drehzahl der Abtriebswelle beim Erfassen des zweiten Verlaufs, wobei diese Beeinflussung anhand des zweiten Verlaufs erkennbar ist.

Bei einem siebten Schritt des Verfahrens wird ein Wirkmoment der Trennkupplung, insbesondere ein aus dem Verstellen der Trennkupplung von ihrem geöffneten Zustand in Richtung ihres geschlossenen Zustands resultierendes Wirkmoment der Trennkupplung, in Abhängigkeit von dem berechneten Reibmoment, dem zweiten Drehzahlgradienten und dem vorgegebenen Trägheitsmoment der Verbrennungskraftmaschine ermittelt. Beispielsweise wird der zweite Drehzahlgradient mit dem Trägheitsmoment der Verbrennungskraftmaschine multipliziert. Aus dieser Multiplikation resultiert beispielsweise ein Gesamtmoment, von welchem das zuvor berechnete Reibmoment subtrahiert wird. Das Ergebnis dieser Subtraktion ist beispielsweise das genannte Wirkmoment. Schließlich wird bei einem achten Schritt des Verfahrens der Greifpunkt der Trennkupplung in Abhängigkeit von dem ermittelten Wirkmoment adaptiert.

Im Rahmen des vierten Schritts, das heißt beim Verstellen der Trennkupplung in Richtung ihres geschlossenen Zustands, wird die Trennkupplung von der elektronischen Recheneinrichtung beispielsweise auf Basis einer Kennlinie angesteuert. Diese Ansteuerung führt zu dem Wirkmoment und somit zu der beschriebenen Beeinflussung der Drehzahl, insbesondere ihres zweiten Verlaufs. Im Rahmen des Verfahrens wird somit das aus der Ansteuerung der Trennkupplung resultierende Wirkmoment ermittelt. Entspricht das Wirkmoment beispielsweise einem Soll-Moment, so müssen die Ansteuerung und somit der Greifpunkt, welcher auch als Tastpunkt bezeichnet wird, nicht verändert werden.

Weicht jedoch das ermittelte Wirkmoment beispielsweise von dem Soll-Moment ab, so können die Ansteuerung und somit der Greifpunkt derart verändert werden, dass die Abweichung des ermittelten Wirkmoments von dem Soll-Moment verringert oder gar aufgehoben wird. Somit kann der Greif- beziehungsweise Tastpunkt mittels des erfindungsgemäßen Verfahrens besonders präzise und schnell, das heißt in nur kurzer Zeit adaptiert werden, indem auf einfache Weise lediglich auf die erfassten Verläufe der Drehzahl der Abtriebswelle und auf das vorgegebene und insbesondere gespeicherte Reibmoment der Verbrennungskraftmaschine zurückgegriffen wird.

Dabei liegt der Erfindung insbesondere die Erkenntnis zugrunde, dass es während eines normalen Betriebs des Fahrzeugs hinreichend oft zu Situationen, insbesondere Fahrsituationen, kommt, in denen das Verfahren durchgeführt werden kann, ohne die jeweilige Fahrsituation für Insassen des Fahrzeugs spürbar zu beeinflussen. Mittels des erfindungsgemäßen Verfahrens ist es somit möglich, den Greifpunkt hinreichend oft und präzise während des Betriebs des Fahrzeugs zu adaptieren. Zu einer solchen Fahrsituation, in welcher das erfindungsgemäße Verfahren besonders vorteilhaft durchgeführt werden kann, kommt es insbesondere dann, wenn beispielsweise eine Hybrid-Ablaufsteuerung einen Übergang von einem hybridischen Fahren zu einem elektrischen Fahren anfordert. Unter dem hybridischen Fahren ist ein Betrieb beziehungsweise ein Fahrzustand des Fahrzeugs zu verstehen, in welchem das Fahrzeug sowohl mittels der elektrischen Maschine als auch mittels der Verbrennungskraftmaschine angetrieben wird. Unter dem elektrischen Fahren ist ein Betrieb beziehungsweise ein Fahrzustand des Fahrzeugs zu verstehen, in welchem das Fahrzeug ausschließlich mittels der elektrischen Maschine, nicht jedoch mittels der Verbrennungskraftmaschine angetrieben wird.

Im Rahmen des elektrischen Fahrens kann die Verbrennungskraftmaschine somit abgelegt, das heißt von der elektrischen Maschine getrennt und deaktiviert werden. Zum Trennen der Verbrennungskraftmaschine von der elektrischen Maschine wird die Trennkupplung geöffnet, wodurch die Abtriebswelle beziehungsweise die Verbrennungskraftmaschine von der elektrischen Maschine beziehungsweise dem Rotor der elektrischen Maschine getrennt wird. Das erfindungsgemäße Verfahren nutzt einen Übergang vom hybridischen Fahren zum elektrischen Fahren, wobei während dieses Übergangs die Abtriebswelle austrudelt beziehungsweise ausdreht, sodass ihre Drehzahl sukzessive gegen 0 geht. Diese Drehzahlabnahme beziehungsweise Drehzahlveränderung wird im Rahmen des erfindungsgemäßen Verfahrens genutzt, um den Greifpunkt der Trennkupplung auf die beschriebene Weise zu adaptieren.

Damit liegt dem Verfahren ferner die Erkenntnis zugrunde, dass der Drehzahlgradient der Verbrennungskraftmaschine beziehungsweise der Abtriebswelle während des Übergangs, das heißt in einer Phase, in welcher die Trennkupplung geöffnet und die Verbrennungskraftmaschine deaktiviert ist, nur durch zwei Größen bestimmt wird: Eine erste der Größen ist das Trägheitsmoment der Verbrennungskraftmaschine, wobei das Trägheitsmoment auch als Massenträgheitsfaktor bezeichnet wird. Die zweite Größe ist das Reibmoment der Verbrennungskraftmaschine. Beide Größen sind bekannt beziehungsweise können auf die beschriebene Weise ermittelt werden. Beim dritten Schritt wird das Reibmoment der Verbrennungskraftmaschine verifiziert, um schließlich das Wirkmoment der Trennkupplung präzise berechnen zu können, sodass in der Folge der Greifpunkt präzise adaptiert werden kann.

Durch das Verstellen der Trennkupplung aus dem geöffneten Zustand in Richtung des geschlossenen Zustands wird der Drehzahlgradient in dem zweiten Verlauf im Vergleich zum ersten Verlauf beeinflusst beziehungsweise verändert, sodass anhand dieser Drehzahlgradientenänderung ein durch die Trennkupplung bewirktes Störmoment und in der Folge das Wirkmoment der Trennkupplung berechnet werden kann.

In vorteilhafter Ausgestaltung der Erfindung ist es vorgesehen, dass zumindest zwischen dem ersten Schritt und dem fünften Schritt ein Aktivieren der Ver-

brennnungskraftmaschine unterbleibt. Dadurch wird ein durch ein Aktivieren der Verbrennungskraftmaschine bewirktes Beeinflussen des Drehzahlgradienten vermieden, sodass der jeweilige Drehzahlgradient und somit das Wirkmoment besonders präzise ermittelt werden können. In der Folge kann der Greifpunkt präzise adaptiert werden. Dieser Ausführungsform liegt ferner die Idee zugrunde, innerhalb genaue eines Übergangs vom hybridischen zum elektrischen Verfahren die Verläufe der Drehzahl und somit die Drehzahlgradienten zu ermitteln, ohne die Verbrennungskraftmaschine zu aktivieren, sodass der Greifpunkt besonders schnell und präzise adaptiert werden kann.

Es ist möglich, die Adaption abzubrechen oder zu unterbrechen und hierzu nach dem ersten Schritt und beispielsweise vor zumindest einem der übrigen Schritte des Verfahrens die Verbrennungskraftmaschine zu aktivieren. Ein solches Aktivieren der Verbrennungskraftmaschine wird auch als Zuschalten der Verbrennungskraftmaschine bezeichnet. Dabei entsteht ein Bedarf, die Verbrennungskraftmaschine zuzuschalten beispielsweise aufgrund eines Wunsches des Fahrers des Fahrzeugs nach Zugkraft, welche von aktivierten der Verbrennungskraftmaschine bereitstellbar ist. Ein solcher Wunsch nach Zugkraft hat Vorrang gegenüber der Adaption des Greifpunkts, sodass die Adaption abgebrochen oder unterbrochen wird, um die Verbrennungskraftmaschine zuzuschalten und den Wunsch nach Zugkraft zu befriedigen. Da Situationen, in denen das Verfahren durchgeführt und somit der Greifpunkt adaptiert werden kann, in einem Normalbetrieb häufig auftreten können, ist das beschriebene Unterbrechen oder Abbrechen der Adaption nicht mit einem Nachteil verbunden.

Diesbezüglich hat es sich als ferner vorteilhaft gezeigt, wenn zumindest zwischen dem ersten Schritt und dem fünften Schritt die Drehzahl der Abtriebswelle stets größer als 0 ist. Mit anderen Worten werden die Verläufe und die Drehzahlgradienten infolge des Öffnens der Trennkupplung ermittelt, bevor die Abtriebswelle zum Stillstand kommt. Dabei hat es sich als ferner vorteilhaft gezeigt, wenn zumindest zwischen dem ersten Schritt und dem vierten Schritt ein Schließen der Trennkupplung beziehungsweise eine Verstellung der Trennkupplung in Richtung ihres geschlossenen Zustands unterbleibt.

In vorteilhafter Ausgestaltung der Erfindung werden die Drehzahlgradienten aus den zuvor genannten Drehzahlintervallen der jeweiligen Verläufe ermittelt, wobei die Drehzahl der Abtriebswelle in den jeweiligen Drehzahlintervallen stets größer als 0 ist. Somit kommt es weder in noch zwischen den Drehzahlintervallen zu einem Stillstand der Abtriebswelle, sodass der Greifpunkt besonders schnell adaptiert werden kann.

Bei einer besonders vorteilhaften Ausführungsform der Erfindung ist es vorgesehen, dass zumindest der erste Schritt, der zweite Schritt, der vierte Schritt und der fünfte Schritt durchgeführt werden, während sich das Fahrzeug bewegt und dabei über seine Räder auf einer Fahrbahn abrollt. Hierdurch kann der Greifpunkt während eines normalen Fahrbetriebs des Fahrzeugs präzise und hinreichend oft adaptiert werden, sodass beispielsweise thermisch bedingte und/oder verschleißbedingte Änderungen des Greifpunkts besonders vorteilhaft kompensiert werden. Ferner hat es sich als vorteilhaft gezeigt, wenn zumindest zwischen dem ersten Schritt und dem fünften Schritt ein Stillstand des Fahrzeugs unterbleibt.

Eine weitere Ausführungsform zeichnet sich dadurch aus, dass zumindest der erste Schritt, der zweite Schritt, der vierte Schritt und der fünfte Schritt durchgeführt werden, wenn das Fahrzeug mittels der elektrischen Maschine angetrieben wird. Dadurch kann der Greifpunkt während eines normalen Betriebs des Fahrzeugs adaptiert werden, ohne den Betrieb für Insassen des Fahrzeugs spürbar zu beeinflussen.

Schließlich hat es sich als besonders vorteilhaft gezeigt, wenn die Trennkupplung bei dem fünften Schritt derart in Richtung ihres geschlossenen Zustands verstellt wird, dass das Wirkmoment in einem Bereich von einschließlich 10 Newtonmeter bis einschließlich 20 Newtonmeter liegt. Hierdurch kann eine besonders präzis erfassbare Beeinflussung beziehungsweise Veränderung des Drehzahlgradienten bewirkt werden, sodass anhand der besonders präzise erfassten Änderung des Drehzahlgradienten das Wirkmoment präzise ermittelt werden kann. In der Folge kann der Greifpunkt besonders präzise adaptiert werden.

Zur Erfindung gehört auch ein Verfahren zum Betreiben eines Kraftfahrzeugs, insbesondere eines Hybridfahrzeugs, mittels eines erfindungsgemäßen Verfahrens. Mit anderen Worten ist vorzugsweise vorgesehen, das erfindungsgemäße Verfahren bei einem Kraftfahrzeug, insbesondere einem Hybridfahrzeug, einzusetzen, wobei mittels des erfindungsgemäßen Verfahrens ein besonders vorteilhafter sowie komfortabler und effizienter Betrieb des Kraftfahrzeugs realisierbar ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

Fig. 1    eine schematische Darstellung eines Antriebsstrangs für ein Fahrzeug, wobei ein Verfahren durchgeführt wird, mittels welchem ein Greifpunkt einer Trennkupplung des Antriebsstrangs besonders präzise und schnell adaptiert werden kann; und

Fig. 2 ein Diagramm zum Veranschaulichen des Verfahrens.

In den Fig. sind gleiche oder funktionsgleiche Elemente mit gleichen Bezugszeichen versehen.

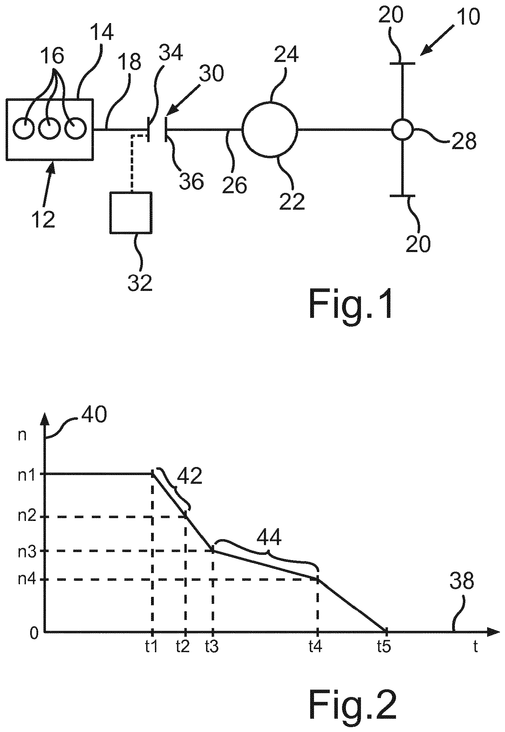

Fig. 1 zeigt in einer schematischen Darstellung einen im Ganzen mit 10 bezeichneten Antriebsstrang für ein Fahrzeug, welches als Kraftfahrzeug, insbesondere als Hybridfahrzeug, ausgebildet ist. Der Antriebsstrang 10 umfasst eine Verbrennungskraftmaschine 12, welche als Hubkolben-Verbrennungsmaschine ausgebildet ist. Dabei umfasst die Verbrennungskraftmaschine 12 ein Zylindergehäuse 14, durch welches eine Mehrzahl von Brennräumen in Form von Zylindern 16 gebildet ist. Ferner umfasst die Verbrennungskraftmaschine 12 eine als Kurbelwelle 18 ausgebildete Abtriebswelle, welche beispielsweise an einem Gehäuseelement der Verbrennungskraftmaschine 12 um eine Drehachse relativ zu dem Gehäuseelement drehbar gelagert ist. Über die Kurbelwelle 18 stellt die Verbrennungskraftmaschine 12 Drehmomente zum Antreiben des Kraftfahrzeugs bereit. Das Kraftfahrzeug umfasst ferner Räder, über die das Kraftfahrzeug bei einer Fahrt, insbesondere Vorwärtsfahrt, auf einer Fahrbahn abrollen kann. Von diesen Rädern sind in Fig. 1 zwei mit 20 bezeichnete Räder des Kraftfahrzeugs gezeigt. Bei den Rädern 20 handelt es sich um sogenannte angetriebene oder antreibbare Räder, da die Räder 20 mittels der Verbrennungskraftmaschine 12 über die Kurbelwelle 18 angetrieben werden können.
Der Antriebsstrang 10 ist als alternativer Antrieb ausgebildet und umfasst eine elektrische Maschine 22. Die Räder 20 und das Kraftfahrzeug insgesamt sind dabei mittels der Verbrennungskraftmaschine 12 sowie mittels der elektrischen Maschine 22 antreibbar. Die Verbrennungskraftmaschine 12 umfasst beispielsweise einen in Fig. 1 sehr schematisch dargestellten Stator 24. Ferner umfasst die elektrische Maschine 22 einen Rotor 26, welcher um eine Drehachse relativ zu dem Stator 24 drehbar ist. Die elektrische Maschine 22 ist beispielsweise in einem Motorbetrieb und somit als Elektromotor betreibbar. In dem Motorbetrieb wird der Rotor 26 von dem Stator 24 angetrieben. Hierzu wird die elektrische Maschine 22 in ihrem Motorbetrieb mit elektrischer Energie beziehungsweise elektrischem Strom versorgt. Diese elektrische Energie wird beispielsweise von einem elektrischen Energiespeicher insbesondere in Form einer Batterie bereitgestellt und der elektrischen Maschine 22 zugeführt.

Vorliegend ist der Rotor 26, welcher beispielsweise wenigstens eine Rotorwelle umfasst, koaxial zur Kurbelwelle 18 angeordnet, sodass die Drehachse, um welche der Rotor 26 relativ zum Stator 24 drehbar ist, mit der Drehachse, um welche die Kurbelwelle 18 relativ zum Gehäuseelement drehbar ist, zusammenfällt.

Der Antriebsstrang 10 weist ein Differenzial 28 auf. Die elektrische Maschine 22 kann in ihrem Motorbetrieb über den Rotor 26 Drehmomente zum Antreiben der Räder 20 und somit zum Antreiben des Kraftfahrzeugs insgesamt bereitstellen. Die von der Verbrennungskraftmaschine 12 über die Kurbelwelle 18 bereitgestellten Drehmomente sowie die von der elektrischen Maschine 22 über den Rotor 26 bereitgestellten Drehmomente zum Antreiben des Kraftfahrzeugs können über das Differenzial 28 auf die Räder 20 übertragen werden, sodass die Räder 20 und somit das Kraftfahrzeug insgesamt angetrieben werden.

Der Antriebsstrang 10 umfasst ferner eine Trennkupplung 30, welche beispielsweise bezogen auf einen Drehmomentenfluss von der Kurbelwelle 18 zu dem Rotor 26 oder umgekehrt zwischen der Kurbelwelle 18 und dem Rotor 26 angeordnet ist. Beispielsweise ist die Trennkupplung 30 als Reibkupplung ausgebildet. Insbesondere ist die Trennkupplung 30 als Mehrlamellenkupplung, insbesondere als nasse Mehrlamellenkupplung, ausgebildet, sodass die Trennkupplung 30 beispielsweise Kupplungslamellen aufweist, welche in einem flüssigen Schmiermittel, insbesondere Öl, laufen.

Die Trennkupplung 30 ist zwischen wenigstens einem geschlossenen Zustand und wenigstens einem geöffneten Zustand verstellbar. Insbesondere ist die Trennkupplung 30 zwischen dem geöffneten Zustand und dem geschlossenen Zustand automatisch verstellbar. Hierzu ist eine elektronische Recheneinheit 32 vorgesehen, welche auch als Steuergerät bezeichnet wird. Das Steuergerät steuert die Trennkupplung 30 an, sodass beispielsweise die Trennkupplung 30 mittels des Steuergeräts über ein in Fig. 1 nicht näher dargestelltes Stellglied automatisch zwischen dem geschlossenen Zustand und dem geöffneten verstellt wird. Mit anderen Worten resultiert eine Verstellung der Trennkupplung 30 aus dem geöffneten Zustand in den geschlossenen Zustand beziehungsweise umgekehrt aus einer entsprechenden, durch das Steuergerät bewirkten Ansteuerung der Trennkupplung 30.

In dem geschlossenen Zustand ist die Kurbelwelle 18 über die Trennkupplung 30 mit dem Rotor 26 verbunden, sodass beispielsweise Drehmomente zwischen der Kurbelwelle 18 und dem Rotor 26 über die Trennkupplung 30 übertragen werden können. In dem geöffneten Zustand ist die Kurbelwelle 18 von dem Rotor 26 entkoppelt, sodass in dem geöffneten Zustand der Trennkupplung 30 keine Drehmomente zwischen der Kurbelwelle 18 und dem Rotor 26 über die Trennkupplung 30 übertragen werden können.

Im Rahmen eines hybridischen Fahrens des Kraftfahrzeugs ist die Trennkupplung 30 geschlossen. Mit anderen Worten befindet sich die Trennkupplung 30 im Rahmen des hybridischen Fahrens in ihrem geschlossenen Zustand, sodass die Räder 20 beziehungsweise das Kraftfahrzeug sowohl mittels der elektrischen Maschine 22 als auch mittels der Verbrennungskraftmaschine 12 angetrieben werden.

Im Rahmen eines elektrischen Fahrens des Kraftfahrzeugs ist die Trennkupplung 30 geöffnet, sodass die Räder 20 und somit das Kraftfahrzeug bezogen auf die Verbrennungskraftmaschine 12 und die elektrische Maschine 22 lediglich mittels der elektrischen Maschine 22 angetrieben werden. Somit kommt es bei einem Übergang von dem hybridischen Fahren zu dem elektrischen Fahren zu einem Öffnen der Trennkupplung 30. Im Rahmen dieses Öffnens wird die Trennkupplung 30 aus ihrem geschlossenen Zustand in ihren geöffneten Zustand verstellt beziehungsweise überführt. Somit ist unter der geöffneten Trennkupplung 30 zu verstehen, dass sich die Trennkupplung 30 in ihrem geöffneten Zustand befindet.

Die Trennkupplung 30 weist einen Greifpunkt auf, welcher auch als Tastpunkt bezeichnet wird. Der Greifpunkt ist beispielsweise eine Stellung der Trennkupplung 30, insbesondere eine Stellung von Kupplungselementen 34 und 36 der Trennkupplung 30, wobei beispielsweise bei dieser Stellung eine Rotation der Kurbelwelle 18 von dem Rotor 26 über die Trennkupplung 30 beeinflusst wird. Mit anderen Worten, wird die Trennkupplung 30 beziehungsweise werden die Kupplungselemente 34 und 36 beispielsweise ausgehend von dem geöffneten Zustand in Richtung des geschlossenen Zustands verstellt, so ist der Greifpunkt diejenige Stellung der Trennkupplung 30 beziehungsweise der Kupplungselemente 34 und 36, bei welcher es zu einer Übertragung eines vorgebbaren Drehmoments über die Trennkupplung 30 und somit zu einer Beeinflussung der Rotation der Kurbelwelle 18 durch den Rotor 26 über die Trennkupplung 30 beziehungsweise umgekehrt kommt. Vor Erreichen dieser Stellung wird durch die Trennkupplung 30 kein Drehmoment beziehungsweise nur ein vernachlässigbar geringes Drehmoment übertragen beziehungsweise vor Erreichen der genannten Stellung findet keine merkliche Beeinflussung der Rotation der Kurbelwelle 18 durch den Rotor 26 über die Trennkupplung 30 beziehungsweise umgekehrt statt.

Der Greifpunkt der Trennkupplung 30 kann beispielsweise verschleißbedingt und/oder temperaturbedingt variieren. Ferner ist es möglich, dass der Greifpunkt aufgrund von Bauteil-Toleranzen variiert. Eine solche Variation beziehungsweise Veränderung des Greifpunkts sollte im Rahmen einer Adaption des Greifpunkts kompensiert werden, um auch über eine hohe Lebensdauer des Antriebsstrangs 10 hinweg einen effizienten und komfortablen Betrieb des Antriebsstrangs 10 zu gewährleisten. Durch die Adaption des Greifpunkts ist es nämlich möglich, dass die Trennkupplung 30 auch bei Variation des Greifpunkts bedarfsgerecht und insbesondere komfortabel verstellt werden kann, sodass beispielsweise ruckartige Verstellungen der Trennkupplung 30, welche von Insassen des Kraftfahrzeugs wahrgenommen werden können, vermieden werden können. Insbesondere ist es durch die Adaption des Greifpunkts möglich, größere Bauteilstreuungen in einem Serien-Produktionsprozess erlauben zu können, sodass das Fahrzeug einfach und kostengünstig hergestellt werden kann.

Um nun den Greifpunkt der Trennkupplung 30 besonders präzise und schnell, das heißt in kurzer Zeit, adaptieren zu können, wird - insbesondere ausgehend von dem hybridischen Fahren - die zunächst aktivierte Verbrennungskraftmaschine 12 deaktiviert und die zunächst geschlossene Trennkupplung 30 geöffnet.

Fig. 2 zeigt ein Diagramm zum Veranschaulichen eines Verfahrens zur Adaption des Greifpunkts. Auf der Abszisse 38 des Diagramms ist die Zeit t aufgetragen, wobei auf der Ordinate 40 des Diagramms die Drehzahl n der Kurbelwelle 18 und somit der Verbrennungskraftmaschine 12 aufgetragen ist. Beispielsweise zu einem ersten Zeitpunkt t1 wird die zunächst geschlossene Trennkupplung 30 geöffnet und die zunächst aktivierte Verbrennungskraftmaschine 12 deaktiviert. Aufgrund des Öffnens der Trennkupplung 30 und aufgrund des Deaktivierens der Verbrennungskraftmaschine 12 nimmt die Drehzahl der Kurbelwelle 18 ab dem ersten Zeitpunkt t1 ab.

Um das Kraftfahrzeug mittels der Verbrennungskraftmaschine 12 anzutreiben, wird die Verbrennungskraftmaschine 12 in ihrem gefeuerten Betrieb betrieben, wobei der gefeuerte Betrieb auch als befeuerter Betrieb bezeichnet wird. Im Rahmen des gefeuerten Betriebs laufen in den Zylindern 16 Verbrennungsvorgänge ab, in deren Rahmen ein jeweiliges Kraftstoff-Luft-Gemisch im jeweiligen Zylinder 16 verbrannt wird. Durch das Deaktivieren der Verbrennungskraftmaschine 12 wird der gefeuerte Betrieb beendet, sodass die Verbrennungskraftmaschine 12 von ihrem gefeuerten Betrieb in ihren ungefeuerten Betrieb überführt wird. Der ungefeuerte Betrieb wird auch als unbefeuerter Betrieb bezeichnet, in dessen Rahmen in den Zylindern 16 keine Verbrennungsvorgänge ablaufen. Somit wird die Kurbelwelle 18 ab dem ersten Zeitpunkt t1 weder von in den Zylindern 16 ablaufenden Verbrennungsvorgängen noch von dem Rotor 26 über die Trennkupplung 30 angetrieben, sodass die Drehzahl der Kurbelwelle 18 abnimmt.

Bei einem zweiten Schritt des Verfahrens wird - während die Trennkupplung 30 geöffnet und die Verbrennungskraftmaschine 12 deaktiviert ist - ein erster Verlauf 42 der Drehzahl der Kurbelwelle 18 erfasst. Der erste Verlauf 42 weist ein erstes Drehzahlintervall auf, welches sich von einer ersten Drehzahl n1 bis zu einer zweiten Drehzahl n2 der Kurbelwelle 18 erstreckt. Da die Drehzahl der Kurbelwelle 18 ab dem Zeitpunkt t1 abnimmt, ist die zweite Drehzahl n2 kleiner als die erste Drehzahl n1. In dem ersten Drehzahlintervall kommt es somit zu einer Abnahme der Drehzahl der Kurbelwelle 18. Diese Abnahme der Drehzahl in dem ersten Drehzahlintervall erfolgt mit einem ersten Drehzahlgradienten, welcher aus dem erfassten ersten Verlauf 42 ermittelt, insbesondere mittels des Steuergeräts berechnet, wird.

Bei einem dritten Schritt des Verfahrens wird ein Reibmoment der Verbrennungskraftmaschine 12 in Abhängigkeit von wenigstens einem vorgegebenen Trägheitsmoment der Verbrennungskraftmaschine 12 und in Abhängigkeit von dem ersten Drehzahlgradienten ermittelt. Das Reibmoment der Verbrennungskraftmaschine 12 wird beispielsweise mit $J_{VM}$ bezeichnet und ist beispielsweise in einer Speichereinrichtung der elektronischen Recheneinrichtung 32 (Steuergerät) gespeichert. Das Reibmoment der Verbrennungskraftmaschine 12 wird beispielsweise mit $M_{reib}$ bezeichnet. Dabei ergibt sich das Reibmoment $M_{reib}$ zu:

$$M_{reib} = J_{VM} * \dot{\omega}_{VM1}.$$

Dabei bezeichnet $\dot{\omega}_{VM1}$ den genannten ersten Drehzahlgradienten. Insgesamt ist aus Fig. 2 erkennbar, dass im ersten Drehzahlintervall ein durch die Trennkupplung 30 bewirktes Beeinflussen der Drehzahl der Kurbelwelle 18 unterbleibt, da die Trennkupplung 30 im ersten Drehzahlintervall geöffnet ist und bleibt.

Bei dem vierten Schritt des Verfahrens wird die Trennkupplung 30 aus ihrem geöffneten Zustand in Richtung ihres geschlossenen Zustands verstellt. Beispielsweise wird bei einem auf den ersten Zeitpunkt t1 folgenden zweiten Zeitpunkt t2 mit dem Verstellen der Trennkupplung 30 in Richtung ihres geschlossenen Zustands begonnen. Unter dem Verstellen der Trennkupplung 30 in Richtung ihres geschlossenen Zustands ist beispielsweise zu verstehen, dass die Trennkupplung 30, insbesondere die Kupplungselemente 34 und 36, ausgehend von dem geöffneten Zustand in Richtung der zuvor genannten Stellung und somit in Richtung des geschlossenen Zustands, jedoch beispielsweise nicht vollständig in den geschlossenen Zustand, verstellt beziehungsweise bewegt werden.

Zwischen dem zweiten Zeitpunkt t2 und einem auf den zweiten Zeitpunkt t2 folgenden dritten Zeitpunkt t3 ist die Trennkupplung 30 beispielsweise trotz des Beginns des Verstellens der Trennkupplung 30 in Richtung des geschlossenen Zustands noch so weit geöffnet, dass eine Beeinflussung der Drehzahl der Kurbelwelle 18 unterbleibt. Ab dem dritten Zeitpunkt t3 jedoch werden die Drehzahl der Kurbelwelle 18 und insbesondere ihre Drehzahländerung durch die Trennkupplung 30 beeinflusst, da die Trennkupplung 30, insbesondere die Kupplungselemente 34 und 36, zu dem dritten Zeitpunkt t3 beispielsweise den genannten Greifpunkt erreichen beziehungsweise erreicht haben. Bei einem fünften Schritt des Verfahrens wird - während die Trennkupplung 30 in Richtung ihres geschlossenen Zustands verstellt wird und die Verbrennungskraftmaschine 12 noch deaktiviert ist - ein zweiter Verlauf 44 der Drehzahl der Kurbelwelle 18 erfasst. Der zweite Verlauf 44 umfasst ein zweites Drehzahlintervall, welches sich von einer dritten Drehzahl n3 bis zu einer vierten Drehzahl n4 erstreckt, wobei die dritte Drehzahl n3 beispielsweise geringer als die zweite Drehzahl n2 und die vierte Drehzahl n4 beispielsweise geringer als die dritte Drehzahl n3 ist. Die Verläufe 42 und 44 können voneinander beabstandet sein. Alternativ dazu ist es denkbar, dass der zweite Verlauf 44 unmittelbar an den ersten Verlauf 42 angrenzt, sodass die zweite Drehzahl n2 der dritten Drehzahl n3 entspricht.

Bei einem sechsten Schritt des Verfahrens wird ein zweiter Drehzahlgradient aus dem erfassten zweiten Verlauf 44 ermittelt. Dieser zweite Drehzahlgradient wird mit $\dot{\omega}_{VM2}$ bezeichnet und wird durch die Trennkupplung 30 beeinflusst, da die Trennkupplung 30 zumindest während eines Teils des zweiten Verlaufs 44 beziehungsweise des zweiten Drehzahlintervalls bereits so weit geschlossen ist, dass die Drehzahl der Kurbelwelle 18 über die Trennkupplung 30 von dem Rotor 26 beeinflusst wird.

Bei einem siebten Schritt des Verfahrens wird ein Wirkmoment $M_{K0}$ der Trennkupplung 30 in Abhängigkeit von dem berechneten Reibmoment $M_{reib}$, in Abhängigkeit von dem zweiten Drehzahlgradienten $\dot{\omega}_{VM2}$ und in Abhängigkeit von dem vorgegebenen Trägheitsmoment $J_{VM}$ berechnet. Das Wirkmoment $M_{K0}$ ergibt sich beispielsweise zu:

$$M_{K0} = M_{ges} - M_{reib}.$$

Dabei bezeichnet $M_{ges}$ ein Gesamtmoment, welches sich ergibt zu:

$$M_{ges} = J_{VM} * \dot{\omega}_{VM2}.$$

Da das Trägheitsmoment $J_{VM}$ vorgegeben beziehungsweise abgespeichert und die Drehzahlgradienten $\dot{\omega}_{VM1}$ und $\dot{\omega}_{VM2}$ aus den erfassten Verläufen 42 und 44 ermittelt werden, kann das Wirkmoment $M_{K0}$ schnell und präzise berechnet werden. Dadurch kann bei einem achten Schritt des Verfahrens der Greifpunkt in Abhängigkeit von dem ermittelten Wirkmoment $M_{K0}$ adaptiert werden.

Die Trennkupplung 30 wird im Rahmen des vierten Schritts des Verfahrens durch eine entsprechende Ansteuerung in Richtung des geschlossenen Zustands verstellt, wobei diese Ansteuerung von der elektronischen Recheneinrichtung 32 an die Trennkupplung 30 erfolgt. Somit kann anhand des Verfahrens das Wirkmoment ermittelt werden, welches aus der entsprechenden Ansteuerung der Trennkupplung 30 resultiert. Entspricht beispielsweise das ermittelte Wirkmoment einem Soll-Moment, so muss die Ansteuerung nicht verändert werden. Weicht jedoch das ermittelte Wirkmoment von dem Soll-Moment ab, so deutet dies auf eine beispielsweise verschleiß- und/oder temperaturbedingte Veränderung des Greifpunkts hin, sodass die Ansteuerung und somit der Greifpunkt derart angepasst werden können, dass die Abweichung zwischen dem Soll-Moment und dem ermittelten Wirkmoment zumindest verringert oder gar aufgehoben wird.

Das beschriebene Verfahren kann insbesondere durchgeführt werden, während das Kraftfahrzeug über seine Räder 20 auf der Fahrbahn abrollt und insbesondere während die Räder 20 und das Kraftfahrzeug mittels der elektrischen Maschine 22 angetrieben werden. Bei einem solchen Normalbetrieb kommt es hinreichend oft zu Fahrsituationen, in denen das beschriebene Verfahren durchgeführt werden kann, sodass der Greifpunkt hinreichend oft und präzise adaptiert werden kann.

**Patentansprüche**

1. Verfahren zur Adaption eines Greifpunkts einer Trennkupplung (30), welche zwischen wenigstens einem geschlossenen Zustand, in dem eine Abtriebswelle (18) einer Verbrennungskraftmaschine (12) zum Antreiben eines Fahrzeugs über die Trennkupplung (30) mit einem Rotor (26) einer elektrischen Maschine (22) zum Antreiben des Fahrzeugs gekoppelt ist, und wenigstens einem geöffneten Zustand, in welchem die Abtriebswelle (18) von dem Rotor (22) entkoppelt ist, verstellbar ist, **gekennzeichnet durch** die Schritte:

   a) Deaktivieren der zunächst aktivierten Verbrennungskraftmaschine (12) und Öffnen der zunächst geschlossenen Trennkupplung (30);
   b) Während die Trennkupplung (30) geöffnet und die Verbrennungskraftmaschine (12) deaktiviert ist: Erfassen eines ersten Verlaufs (42) der Drehzahl (n) der Abtriebswelle (18);
   c) Berechnen eines Reibmoments der Verbrennungskraftmaschine (12) in Abhängigkeit von wenigstens einem vorgegebenen Trägheitsmoment der Verbrennungskraftmaschine (12) und einem ersten Drehzahlgradienten, der aus dem erfassten ersten Verlauf (42) ermittelt wird;
   d) Verstellen der Trennkupplung (30) in Richtung ihres geschlossenen Zustands;
   e) Während die Trennkupplung (30) in Richtung ihres geschlossenen Zustands verstellt wird und die Verbrennungskraftmaschine (12) noch deaktiviert ist: Erfassen eines auf den ersten Verlauf (42) folgenden zweiten Verlaufs (44) der Drehzahl (n) der Abtriebswelle (18);
   f) Ermitteln eines zweiten Drehzahlgradienten aus dem erfassten zweiten Verlauf (44);
   g) Ermitteln eines Wirkmoments der Trennkupplung (30) in Abhängigkeit von dem berechneten Reibmoment, dem zweiten Drehzahlgradienten und dem vorgegebenen Trägheitsmoment der Verbrennungskraftmaschine (12); und
   h) Adaption des Greifpunkts in Abhängigkeit von dem ermittelten Wirkmoment.

2. Verfahren nach Anspruch 1,
   **dadurch gekennzeichnet, dass**
   zumindest zwischen dem Schritt a) und dem Schritt e) ein Aktivieren der Verbrennungskraftmaschine (12) unterbleibt.

3. Verfahren nach Anspruch 1 oder 2,
   **dadurch gekennzeichnet, dass**

zumindest zwischen dem Schritt a) und dem Schritt e) die Drehzahl der Abtriebswelle (18) stets größer als 0 ist.

4. Verfahren nach einem der vorhergehenden Ansprüche,
   **dadurch gekennzeichnet, dass**
   die Drehzahlgradienten (n) aus jeweiligen Drehzahlintervallen (n1, n2, n3, n4) der jeweiligen Verläufe (42, 44) ermittelt werden, wobei die Drehzahl (n) der Abtriebswelle (18) in den jeweiligen Drehzahlintervallen (n1, n2, n3, n4) stets größer als 0 ist.

5. Verfahren nach einem der vorhergehenden Ansprüche,
   **dadurch gekennzeichnet, dass**
   zumindest die Schritte a), b), d) und e) durchgeführt werden, während sich das Fahrzeug bewegt und dabei über seine Räder (20) auf einer Fahrbahn abrollt.

6. Verfahren nach Anspruch 5,
   **dadurch gekennzeichnet, dass**
   zumindest die Schritte a), b), d) und e) durchgeführt werden, während das Fahrzeug mittels der elektrischen Maschine (22) angetrieben wird.

7. Verfahren nach einem der vorhergehenden Ansprüche,
   **dadurch gekennzeichnet, dass**
   die Trennkupplung bei dem Schritt e) derart in Richtung ihres geschlossenen Zustands verstellt wird, dass das Wirkmoment in einem Bereich von einschließlich 10 Newtonmeter bis einschließlich 20 Newtonmeter liegt.

8. Verfahren zum Betreiben eines Hybridfahrzeugs mittels eines Verfahrens nach einem der vorhergehenden Ansprüche.

**Claims**

1. Method for adapting an engagement point of a separating clutch (30) that can be moved between at least one engaged state in which an output shaft (18) of an internal combustion engine (12) for driving a vehicle is coupled, via the separating clutch (30), to a rotor (26) of an electric machine (22) for driving the vehicle, and at least one disengaged state in which the output shaft (18) is decoupled from the rotor (22), **characterised by** the steps:

   a) deactivating the initially activated internal combustion engine (12) and disengaging the initially engaged separating clutch (30);
   b) while the separating clutch (30) is disengaged and the internal combustion engine (12) is deactivated: detecting a first profile (42) of the speed (n) of the output shaft (18);

c) calculating a frictional torque of the internal combustion engine (12) as a function of at least one predetermined moment of inertia of the internal combustion engine (12) and a first speed gradient which is determined from the detected first profile (42);

d) adjusting the separating clutch (30) towards its engaged state;

e) while the separating clutch (30) is adjusted towards its engaged state and the internal combustion engine (12) is still deactivated: detecting a second profile (44), following the first profile (42), of the speed (n) of the output shaft (18);

f) determining a second speed gradient from the detected second profile (44);

g) determining an effective torque of the separating clutch (30) as a function of the calculated friction torque, the second speed gradient and the predetermined moment of inertia of the internal combustion engine (12); and

h) adapting the engagement point as a function of the detected effective torque.

2. Method according to claim 1,
**characterised in that**
the internal combustion engine (12) is not activated, at least between the step a) and step e).

3. Method according to claim 1 or 2,
**characterised in that**
the speed of the output shaft (18) is always greater than 0, at least between the step a) and step e).

4. Method according to any one of the preceding claims,
**characterised in that**
the speed gradients (n) are determined from the respective speed intervals (n1, n2, n3, n4) of the respective profiles (42, 44), wherein the speed (n) of the output shaft (18) is always greater than 0 in the respective speed intervals (n1, n2, n3, n4).

5. Method according to any one of the preceding claims,
**characterised in that**
at least the steps a), b), d) and e) are carried out, while the vehicle is moving and thus rolling by means of its wheels (20) on a roadway.

6. Method according to claim 5,
**characterised in that**
at least steps a), b), d) and e) are carried out, while the vehicle is driven by means of an electric machine (22).

7. Method according to any one of the preceding claims,

**characterised in that**
the separating clutch is adjusted towards its engaged state in step e) in such a way that the effective torque is in range from approximately 10 newton-metres to approximately 20 newton-metres.

8. Method for operating a hybrid vehicle by means of a method according to any one of the preceding claims.

**Revendications**

1. Procédé d'adaptation d'un point de saisie d'un embrayage de séparation (30) qui peut être réglé entre au moins un état fermé, dans lequel un arbre de sortie (18) d'un moteur à combustion interne (12) est couplé pour l'entraînement d'un véhicule par l'embrayage de séparation (30) à un rotor (26) d'un moteur électrique (22) pour l'entraînement du véhicule, et au moins un état ouvert, dans lequel l'arbre de sortie (18) est découplé du rotor (22), **caractérisé par** les étapes :

a) la désactivation du moteur à combustion interne (12) activé tout d'abord et l'ouverture de l'embrayage de séparation (30) fermé tout d'abord ;

b) alors que l'embrayage de séparation (30) est ouvert et le moteur à combustion interne (12) est désactivé : la détection d'une première étendue (42) de la vitesse de rotation (n) de l'arbre de sortie (18) ;

c) le calcul d'un couple de friction du moteur à combustion interne (12) en fonction d'au moins un couple d'inertie prédéfini du moteur à combustion interne (12) et d'un premier gradient de vitesse de rotation qui est déterminé à partir de la première étendue (42) détectée ;

d) le réglage de l'embrayage de séparation (30) en direction de son état fermé ;

e) alors que l'embrayage de séparation (30) est réglé en direction de son état fermé et le moteur à combustion interne (12) est encore désactivé : la détection d'une seconde étendue (44) suivant la première étendue (42) de la vitesse de rotation (n) de l'arbre de sortie (18) ;

f) la détermination d'un second gradient de vitesse de rotation à partir de la seconde étendue (44) détectée ;

g) la détermination d'un couple actif de l'embrayage de séparation (30) en fonction du couple de friction calculé, du second gradient de vitesse de rotation et du couple d'inertie prédéfini du moteur à combustion interne (12) ; et

h) l'adaptation du point de prise en fonction du couple actif déterminé.

2. Procédé selon la revendication 1,
   **caractérisé en ce que**
   une activation du moteur à combustion interne (12) cesse au moins entre l'étape a) et l'étape e).

3. Procédé selon la revendication 1 ou 2,
   **caractérisé en ce que**
   au moins entre l'étape a) et l'étape e) la vitesse de rotation de l'arbre de sortie (18) est en permanence supérieure à 0.

4. Procédé selon l'une quelconque des revendications précédentes,
   **caractérisé en ce que**
   les gradients de vitesse de rotation (n) sont déterminés à partir d'intervalles de vitesse de rotation (n1, n2, n3, n4) respectifs des étendues respectives (42, 44), dans lequel la vitesse de rotation (n) de l'arbre de sortie (18) dans les intervalles de vitesse de rotation (n1, n2, n3, n4) respectifs est en permanence supérieure à 0.

5. Procédé selon l'une quelconque des revendications précédentes,
   **caractérisé en ce que**
   au moins les étapes a), b), d) et e) sont réalisées alors que le véhicule se déplace et roule par le biais de ses roues (20) sur une chaussée.

6. Procédé selon la revendication 5,
   **caractérisé en ce que**
   au moins les étapes a), b), d) et e) sont réalisées alors que le véhicule est entraîné au moyen du moteur électrique (22).

7. Procédé selon l'une quelconque des revendications précédentes,
   **caractérisé en ce que**
   l'embrayage de séparation est réglé lors de l'étape e) en direction de son état fermé de telle manière que le couple actif se trouve dans une plage de 10 newton mètres inclus à 20 newton mètres inclus.

8. Procédé de fonctionnement d'un véhicule hybride au moyen d'un procédé selon l'une quelconque des revendications précédentes.

Fig.1

Fig.2

**IN DER BESCHREIBUNG AUFGEFÜHRTE DOKUMENTE**

**In der Beschreibung aufgeführte Patentdokumente**

- DE 10228709 A1
- WO 2009127459 A1
- DE 102013220399 A1
- WO 2008064633 A1